# EUROPEAN PATENT APPLICATION

(11) **EP 3 441 656 A1**
(43) Date of publication of application: **13.02.2019**
(21) Application number: 18182915.1
(22) Date of filing: 11.07.2018
(51) Int. Cl.: F16L 27/12, F16L 15/02, F16K 15/06, F04D 29/42

(54) **FLEXIBLE JOINT WITH NON-RETURN VALVE**

(30) Priority: 09.08.2017 EP 17185580
(71) Applicant: DP Industries B.V., 2401 LJ Alphen a/d Rijn (NL)
(72) Inventor: HEGEMAN, Bas, 2401 LJ Alphen a/d Rijn (NL)
(74) Representative: Graf, Hans

(57) **Abstract**

A joint for a piping system for fluid transport, where the joint has an inner housing part (1), an outer housing part (2), where the joint has flexible length adjustable by moving the inner housing part relative to the outer housing part, where a notch (A) is made in housing part (1) which indicates the optimum adjustment of length by bringing the edge (C) of the outer housing (2) with notch (A) in proper vicinity, a non-return valve (3) being placed inside the inner housing part (1).

## Description

The following invention relates to a joint for a piping system for fluid transport, especially to a joint which is adjustable in length to avoid tensile forces in a piping system.

There are several methods to avoid tensile forces within a system of pipes, pumps, and valves, when it is rigidly connected. For connection to the system a special connector or joint is necessary. In most applications it is possible to connect pipes and armatures by cutting pipes in the right size. Sometimes it is not possible to do that in an exact manner so it is necessary to have a joint of flexible length.

EP0979950 shows a connecting element of a centrifugal pump which is a normal flange which is not in a one piece connection with the pump housing but offers the possibility of inserting an adapter to adjust length of the pump housing. This idea offers flexibility but it is necessary for the person installing the pump to keep a set of different adapters ready when connecting the centrifugal pump to the piping system. Additionally it is necessary to equip each centrifugal pump casing or valve casing with this adapter which might be not always possible.

The problem to be solved with the following invention is the adaption of the length of a casing of a pump or a valve or any other armature, in a simple way without using a large set of different pieces. It is also an aim to keep the adaption very simple in handling and flexible.

The problem is solved by a joint adapter presented in Claim 1. This joint adapter is composed of an inner housing part and an outer housing part, where the joint has flexible length adjustable by moving the inner housing part relative to the outer housing part.

This gives the possibility of adapting length of this component to the need in the piping system. Due to tolerances of parts and length deviations in the connections there might be unexpected variance. Sometimes it is necessary to offer a wide range of flexibility when this last component of the piping system is installed.

Another advantage of the current invention is the possibility of reducing length of the joint component for removing this component, which makes it easier to remove other components like pumps or valves from the system.

In a special embodiment the joint for piping system includes a non-return valve which is placed inside the inner housing part. The possibility of using the joint adapter as a housing for this non-return valve reduces the number of components in the piping system.

It is also possible to use the inner housing as an intake to install other technical equipment for example for sensors.

In another embodiment this non-return valve is realized as a cartridge module which could be installed removable. This makes it easy to change the non-return valve if there is some wear problem. Also other features like sensors can be installed as cartridge, which makes maintenance easy.

Length of the joint can be adjusted by rotating the inner housing part in a thread of the outer housing part in a special embodiment of the invention. Using the screw thread gives the joint maximum flexibility for adjusting the length of the component. Having the component in the exactly right size makes it possible to install and uninstall the joint in the piping system without having any tension forces in the system. In an additional embodiment it might be possible to adjust radial or an angle offset.

All movable parts of the adjustable component are sealed, especially by o-rings. For controlling the size of the joint component it is useful to place a length scale on the one housing part where the other housing part is the indicator of length.

The adapter joint component can use any flanges which are directly connected to the inner and outer housing part. This makes it easy to install in any piping system. To use the maximum flexibility it is necessary to have rotatable flanges mounted at the inner and outer housing part.

A more particular description of the invention will be rendered by reference to a specific embodiment shown in the figures.

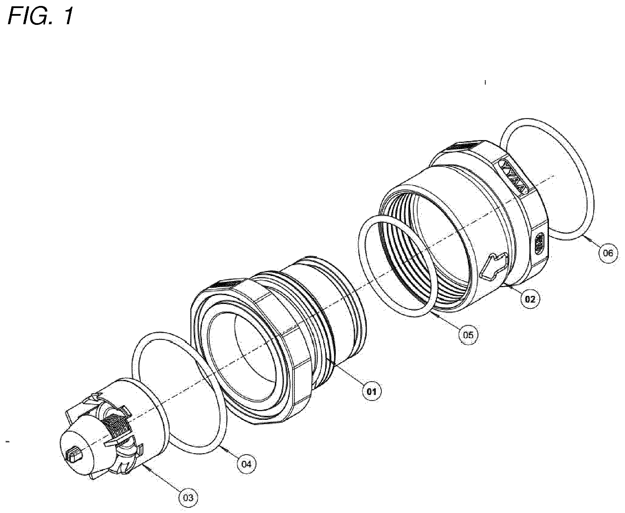

Fig. 1 shows an explosion drawing of the non-return valve inserted in the inventive body of the adapter joint. The housing consists of an inner housing part 1 and an outer housing part 2. A non-return valve 3 is inserted in the inner housing part 1. The valve is made as a cartridge which can be easily exchanged when necessary.

On the inner housing part there is a male thread which works together works together with a female screw thread of the outer housing part 2. Length of the adapter joint can be adjusted by turning parts.

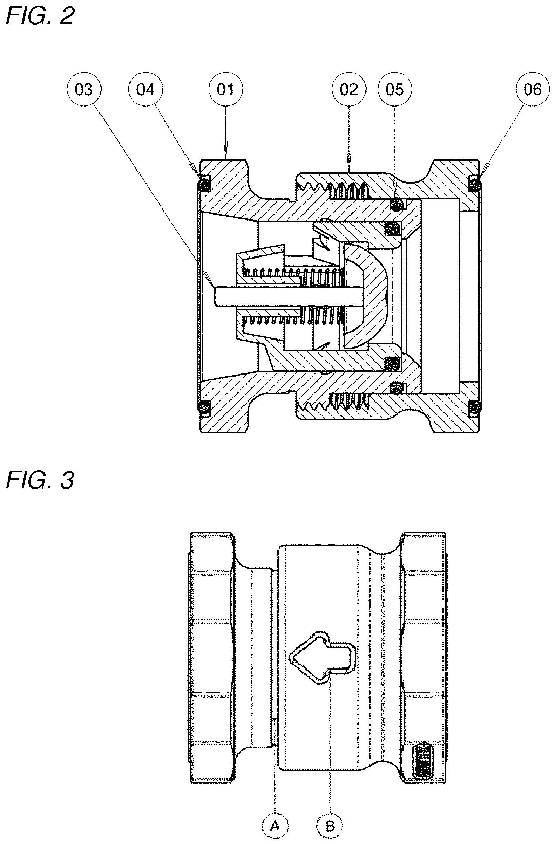

The whole joint adapter is sealed by o-rings 4, 5, 6 to avoid internal and external leakage. Fig. 2 shows a cross sectional view of the adapter joint.

Fig. 3 shows an assembled non return valve. On the inner housing 1 there is a small machined indicator for the minimum length of the component. There is also a machined edge A to indicate the right maximum length of the joint connector.

Additionally here is an arrow B indicating the flow direction of the non-return valve.

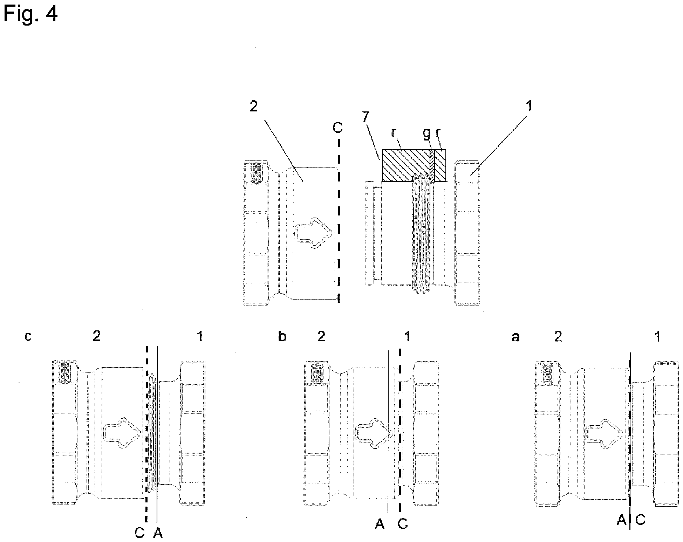

Fig. 4 shows the inner housing part 1 with a notch A milled in the housing. The left edge C of the outer housing 2 is used as a mark to get the right length to the non-return valve when it is assembled. During installation outer housing 2 is screwed to the inner housing 1 as much as possible. This means, that notch A will not be visible. In this shortest configuration the non-return valve could be placed between the neighboring tubes. As indicated in Fig.4b this configuration is not correct, because A and C are not aligned properly. Next step is to screw the outer housing 2 to the right to increase length. This could be done until notch A is getting visible. As indicated in Fig. 4 a the right length is when A and C are in direct vicinity. Further increase of length brings the non-return valve again in an unstable configuration. As indicated in Fig. 4c length is not adjusted well because there is a far gap between A and C.

This could be supported by adding a red - green - red r, g, r scale 7 next to and on the notch to get a visual feedback indicating the correct alignment.

## Claims

1. A joint for a piping system for fluid transport, where the joint has an inner housing part (1), an outer housing part (2), where the joint has flexible length adjustable by moving the inner housing part relative to the outer housing part, where a notch (A) is made in housing part (1) which indicates the optimum adjustment of length by bringing the edge (C) of the outer housing (2) with notch (A) in proper vicinity.

2. Joint for piping system according to claim 1, characterized that a non-return valve (3) is placed inside the inner housing part (1).

3. Joint for piping system according to claim 2 characterized that the non-return valve (3) is a cartridge module which is installed removable.

4. Joint for piping system according to claims 1 to 3, where length of the joint can be adjusted by rotating the inner housing part (1) in a thread of the outer housing part (2).

5. Joint for piping system according to claims 1 to 4, where all movable parts are sealed, especially by o-rings.

6. Joint for piping system according to claims 1 to 5 where the adjustable length of the joint is of a size that it is possible to install and uninstall the joint in a piping system without having any tension forces in the system.

7. Joint for piping system according to claims 1 to 6 where the flanges are directly connected to the inner and outer housing part (1, 2)

8. Joint for piping system according to claims 1 to 7, where a scale shows total length of the joint.

9. Joint for piping system according to claims 1 to 8, where a scale is a visual and or a tactical scale.

10. Joint for piping system according to claim 9, where the visual scale consists of virtual zones, e.g. in red-green-red (r, g, r) indication (7), to show correct length of the joint.
